(19) Europäisches Patentamt
European Patent Office
Office européen des brevets

(11) EP 1 796 465 B1

(12) EUROPEAN PATENT SPECIFICATION

(45) Date of publication and mention of the grant of the patent:
**17.09.2008 Bulletin 2008/38**

(21) Application number: **05798763.8**

(22) Date of filing: **27.09.2005**

(51) Int Cl.:
***A01N 43/56*** *(2006.01)* ***A01N 37/50*** *(2006.01)*
***A01N 43/653*** *(2006.01)* ***A01N 43/76*** *(2006.01)*

(86) International application number:
**PCT/US2005/034254**

(87) International publication number:
**WO 2006/036827 (06.04.2006 Gazette 2006/14)**

# (54) FUNGICIDAL MIXTURES OF THIOPHENE DERIVATIVE

FUNGIZIDE MISCHUNGEN MIT THIOPHENDERIVATEN

MELANGES FONGICIDES DE DERIVE DE THIOPHENE

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.09.2004 US 613430 P**

(43) Date of publication of application:
**20.06.2007 Bulletin 2007/25**

(73) Proprietor: **E.I. DU PONT DE NEMOURS AND COMPANY**
**Wilmington, DE 19898 (US)**

(72) Inventor: **FOOR, Stephen, Ray**
**Hockessin, Delaware 19707 (US)**

(74) Representative: **Beacham, Annabel Rose et al**
**Frank B. Dehn & Co.**
**St Bride's House**
**10 Salisbury Square**
**London**
**EC4Y 8JD (GB)**

(56) References cited:
**EP-A- 0 737 682**
**WO-A-20/05034628**
**WO-A-20/05041653**
**WO-A-20/05077901**
**WO-A-20/05122770**

- **TOMIYA, K.; YANASE, Y.: "MTF-753: a novel fungicide" CONGRESS PROCEEDINGS - BCPC INTERNATIONAL CONGRESS: CROP SCIENCE & TECHNOLOGY, GLASGOW, UNITED KINGDOM, NOV. 10-12, 2003, vol. 1, 2003, pages 99-104, XP009060687 Bracknell, UK**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This invention relates to fungicidal mixtures of a certain thiophene derivative and to compositions comprising such mixtures and methods for using such mixtures as fungicides.

The control of plant diseases caused by fungal plant pathogens is extremely important in achieving high crop efficiency. Plant disease damage to ornamental, vegetable, field, cereal, and fruit crops can cause significant reduction in productivity and thereby result in increased costs to the consumer. Many products are commercially available for these purpose, but the need continues for new mixtures and compositions that are more effective, less costly, less toxic, environmentally safer or have different modes of action.

Fungicides that effectively control plant fungi are in constant demand by growers. Combinations of fungicides are often used to facilitate disease control and to retard resistance development. It is desirable to enhance the activity spectrum and the efficacy of disease control by using mixtures of active ingredients that provide a combination of curative, systemic and preventative control of plant pathogens. Also desirable are combinations that provide greater residual control to allow for extended spray intervals. It is also very desirable to combine fungicidal agents that inhibit different biochemical pathways in the fungal pathogens to retard development of resistance to any one particular plant disease control agent.

Being able to reduce the quantity of chemical agents released in the environment while ensuring effective protection of crops from diseases caused by plant pathogens is always desirable. Mixtures of fungicides may provide significantly better disease control than could be predicted based on the activity of the individual components. This synergism has been described as "the cooperative action of two components of a mixture, such that the total effect is greater or more prolonged than the sum of the effects of the two (or more) taken independently" (see P. M. L. Tames, Neth. J. Plant Pathology 1964, 70, 73-80).

New fungicidal agents that are particularly advantageous in achieving one or more of the preceding objectives continue to be needed

United States Patent No. 5,747,518 discloses certain thiophene derivative compounds of Formula i as new fungicidal active ingredients.

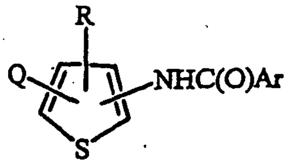

i

SUMMARY OF THE INVENTION

This invention relates to a fungicidal mixture comprising

(a) *N*-[2-(1,3-dimethylbutyl)-3-thienyl]-1-methyl-3-(trifluoromethyl)-1*H*-pyrazole-4-carboxamide (including all stereoisomers) or an agriculturally suitable salt whereof; and

(b) at least one compound selected from the group consisting of famoxadone, fenamidone, and compounds of Formula III which act at the $bc_1$ complex of the fungal mitochondrial respiratory electron transfer site;

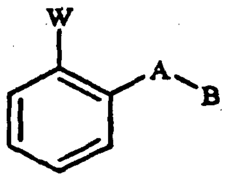

III

wherein

W is one of the following group

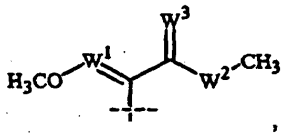 , 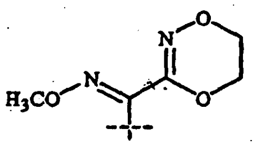 or 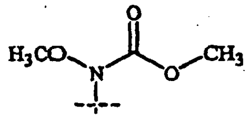 ;

$W^1$ is N or CH;

$W^2$ is NH, O or $CH_2$;

$W^3$ is O or $CH_2$;

A is one of the following groups (wherein asterisk (*) is attached to the phenyl ring of the Formula III);

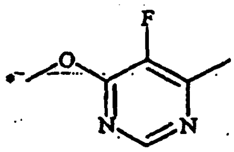 , 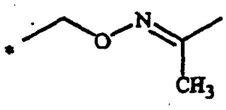 or 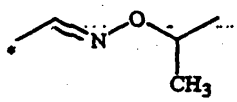 ;

B is 1,2-propandion-bis(*O*-methyloxim)-1-yl; or phenyl, phenoxy or pyridinyl, each optionally substituted with 1 or 2 substituents selected from Cl, CN, methyl or trifluoromethyl; or

A and B together are $-CH_2O$(1-[4-chlorophenyl]-pyrazol-3-yl) or $-CH_2O$(6-trifluoromethyl-2-pyridinyl).

and agriculturally suitable salts thereof; and optionally

(c) at least one compound selected from the group consisting of compounds acting at the demethylase enzyme of the sterol biosynthesis pathway and agriculturally suitable salts thereof.

This invention also relates to a fungicidal composition comprising a fungicidally effective amount of a mixture of the invention and at least one additional component selected from the group consisting of surfactants, solid diluents and liquid diluents.

This invention also relates to a method for controlling a plant disease caused by a fungal plant pathogen comprising applying to the plant or portion thereof a fungicidally effective amount of a mixture of the invention (e.g., as a composition described herein).

DETAILS OF THE INVENTION

The compound *N*-[2-(1,3-dimethylbutyl)-3-thienyl]-1-methyl-3-(trifluoromethyl)-1*H*-pyrazole-4-carboxamide, alternatively named 3-(bifluoromethyl)-1-methyl-*N*-(2-(4-methylpentan-2-yl)thiophen-3-yl)-1*H*-pyrazole-4-carboxamide and N-{2-(1,3-dirmethylbutyl)-3-thienyl}-3-trifluoromethyl-1-methylpyrazole-4-carboxamide, can be represented by Formula I:

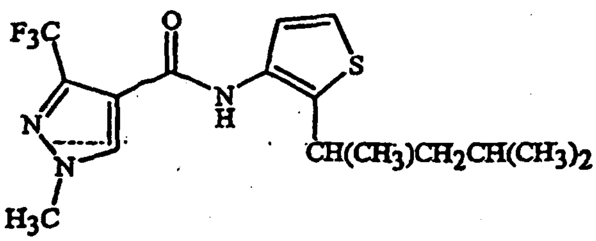

I

Many compounds in the mixtures of this invention (e.g., the compound of Formula I) can exist as one or more stereoisomers. Depending on the compounds, various stereoisomers can include enantiomers, diastereomers, atropisomers and geometric isomers. One skilled in the art will appreciate that one stereoisomer may be more active and/or may exhibit beneficial effects when enriched relative to the other stereoisomer(s) or when separated from the other

stereoisomer(s). Additionally, the skilled artisan knows how to separate, enrich, and/or to selectively prepare said stereoisomers. The compounds in the mixtures of this invention may be present as a mixture of stereoisomers, individual stereoisomers, or as an optically active form.

Agriculturally suitable salts of the compounds in the mixtures of the present invention include acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. Agriculturally suitable salts of the compounds in the mixtures of the present invention also include those formed with organic bases (pyridine, ammonia, or triethylamine) or inorganic bases (hydrides, hydroxides, or carbonates of sodium, potassium, lithium, calcium, magnesium or barium) when the compound contains an acidic group such as a carboxylic acid or phenol.

Embodiments of the present invention include:

Embodiment 1. A mixture wherein component (b) is pyraclostrobin.
Embodiment 2. A mixture wherein component (b) is trifloxystrobin.
Embodiment 3. A mixture wherein component (b) is famoxadone.
Embodiment 4. A mixture also comprising at least on compound selected from the group consisting of compounds acting at the demethylase enzyme of the sterol biosynthesis pathway and agriculturally suitable salts thereof.

Also noteworthy as embodiments are fungicidal compositions of the present invention comprising a fungicidally effective amount of a mixture of Embodiments 1 to 4 and at least one additional component selected from the group consisting of surfactants, solid diluents and liquid diluents. Embodiments of the invention further include methods for controlling plant diseases caused by fungal plant pathogens comprising applying to the plant or portion thereof, or to the plant seed or seedling, a fungicidally effective amount of a mixture of Embodiments 1 to 4 (e.g., as a composition described herein).

The compound *N*-[2-(1,3-dimethylbutyl)-3-tbienyl]-1-methyl-3-(trifluoromethyl)-1*H*-pyrazole-4-carboxamide can be prepared by one or more of the methods and variations thereof as described in United States Patent No. 5,747,518 (see e.g., Example 14).

The fungicidal compounds of components (b) and (c) have been described in published patents and scientific journal papers. Many of these compounds are commercially available as active ingredients in fungicidal products. These compounds are described in compendia such as The Pesticide Manual, 13th edition, C. D. S. Thomlin (Ed.), British Crop Protection Council, Surrey, UK, 2003. These groups are further described below.

$bc_1$ Complex Fungicides (component (b))

Strobilurin fungicides such as fluoxastrobin, orysastrobin, picoxystrobin, pyraclostrobin and trifloxystrobin are known to have a fungicidal mode of action which inhibits the $bc_1$ complex in the mitochondrial respiration chain (Angew. Chem. Int. Ed 1999, 38, 1328-1349). Other strobilurin fungicides suitable for component (b) include (2E)-2-(2-{[6-(3-chloro-2-methylphenoxy)-5-fluor-4-pyrimidinyl]oxy} phenyl)-2-(methoxyimino)-*N*-methylethanamide, (2*E*)-2-(methoxyimino)-*N*-methyl-2-(2-{[({(1*E*)-1-[3-(trifluoromethyl)phenyl]ethyliden}amino)oxy]methyl}phenyl)ethanamide, (2E)-2-methoxyimino)-*N*-methyl-2-{2-[(*E*)-({1-[3-(thfluoromethyl)phenyl] ethoxy}imino)methyl] phenyl)ethanamide. Other compounds that inhibit the $bc_1$ complex in the mitochondrial respiration chain include famoxadone and fenamidone. The $bc_1$ complex is sometimes referred to by other names in the biochemical literature, including complex III of the electron transfer chain, and ubihydroquinone:cytochrome c oxidoreductase. It is uniquely identified by the Enzyme Commission number EC1.10.2.2. The $bc_1$ complex is described in, for example, J. Biol. Chem. 1989, 264, 14543-48; Methods Enzymol. 1986, 126, 253-71; and references cited therein.

Inhibitors of Demethylase in Sterol Biosynthesis (component (c))

Sterol biosynthesis inhibitors control fungi by inhibiting enzymes in the sterol biosynthesis pathway. Demethylase-inhibiting fungicides have a common site of action within the fungal sterol biosynthesis pathway; that is inhibition of demethylation at position 14 of lanosterol or 24-methylene dihydrolanosterol, which are precursors to sterols in fungi. Compounds acting at this site are often referred to as demethylase inhibitors, DMI fungicides, or DMIs. The demethylase enzyme is sometimes referred to by other names in the biochemical literature, including cytochrome P-450 (14DM). The demethylase enzyme is described in, for example, J. Biol. Chem. 1992, 267, 13175-79 and references cited therein. DMI fungicides fall into several chemical classes: azoles (including triazoles and imidazoles), pyrimidines, piperazines and pyridines. The triazoles include azaconazole, bromuconazole, cyproconazole, difenoconazole, diniconazole (including diniconazole-M. epoxiconazole, etaconazole, fenbuconazole, fluquinconazole, flusilazole, flutriafol, hexaconazole, imibenconazole, ipconazole, metconazole, myclobutanil, penconazole, propiconazole, prothioconazole, quinconazole, simeconazole, tebuconazole, tetraconazole, triadimefon, triadimenol, triticonazole and uniconazole. The imidazoles

include clotrimazole, econazole, imazalil, isoconazole, miconazole, oxpoconazole, prochloraz and triflumizole. The pyrimidines include fenarimol, nuarimol and triarimol. The piperazines include triforine. The pyridines include buthiobate and pyrifenox. Biochemical investigations have shown that all of the above mentioned fungicides are DMI fungicides as described by K. H. Kuck, et al. in Modern Selective Fungicides - Properties, Applications and Mechanisms of Action, H. Lyr (Ed.), Gustav Fischer Verlag: New York, 1995, 205-258.

Descriptions of the commercially available compounds listed above may be found in The Pesticide Manual, Thirteenth Edition, C. D. S. Tomlin (Ed.), British Crop Protection Council, 2003.

This invention provides combinations of fungicides that have different biochemical modes of action. Such combinations can be particularly advantageous for resistance management, especially where the fungicides of the combination control the same or similar diseases. Examples include combinations of the compound of Formula I with strobilurins such as fluoxastrobin, picoxystrobin, pyraclostrobin and trifloxystrobin; and optionally, DMIs such as cyproconazole, epoxiconazole, fluquinconazole, flusilazole, hexaconazole, metconazole, propiconazole, prothioconazole and tebuconazole.

This invention also provides combinations of fungicides that provide an expanded spectrum of disease control or enhanced efficacy, including enhanced residual, curative, or preventive control. Examples include combinations of the compound of Formula I with strobilurins such as fluoxastrobin, picoxystrobin, pyraclostrobin and trifloxystrobin; and optionally, DMIs such as bromuconazole, cyproconazole, epoxiconazole, fluquinconazole, flusilazole, hexaconazole, metconazole, propiconazole, prothioconazole and tebuconazole.

This invention also provides combinations of fungicides that are particularly useful for controlling cereal diseases (e.g., *Erisyphe graminis, Septoria nodorum, Septoria tritici, Puccinia recondite* and *Pyrenophora teres).* Examples include combinations of the compound of Formula I with strobilurins such as fluoxastrobin, picoxystrobin, pyraclostrobin and trifloxystrobin; and optionally, DMIs such as bromuconazole, cyproconazole, epoxiconazole, fluquinconazole, flusilazole, hexaconazole, metconazole, propiconazole, prothioconazole and tebuconazole. Of particular note is the use of these combinations for controlling barley diseases (e.g., *Pyrenophora teres).*

This invention also provides combinations of fungicides that are particularly useful for controlling diseases of fruits and vegetables (*Alternaria solani, Botrytis cinerea, Rhizoctonia solani, Uncinula necatur and Venturia inaequalis*). Examples include combinations of the compound of Formula I with strobilurins such as picoxystrobin, pyraclostrobin and trifloxystrobin; and optionally, DMIs such as bromuconazole, cyproconazole, epoxiconazole, fluquinconazole, flusilazole, hexaconazole, metconazole, propiconazole, prothioconazole and tebuconazole.

The weight ratios of component (b) to component (a) in the mixtures and compositions of the present invention are typically from 100:1 to 1:100, preferably from 25:1 to 1:25, and more preferably from 10:1 to 1:10. Of note are mixtures and compositions wherein the weight ratio of component (b) to component (a) is from 5:1 to 1:1. Examples of these compositions include compositions comprising a mixture of the compound of Formula I with trifloxystrobin, a mixture of the compound of Formula I with fluoxastrobin, a mixture of the compound of Formula I with picoxystrobin, or a mixture of the compound of Formula I with pyraclostrobin.

Of note are compositions wherein component (b) and component (c) are both present. Examples are compositions comprising pyraclostrobin or trifloxystrobin as component (b), and at least one component (c) compound Of note are such compositions wherein the overall weight ratio of components (b) and (c) to component (a) is from 100:1 to 1: 100 and the weight ratio of component (b) to component (a) is from 25:1 to 1:25. Included are compositions wherein the weight ratio of component (b) to component (a) is from 5:1 to 1:1. Examples of these compositions include compositions comprising mixtures of component (a) with trifloxystrobin and a compound selected from the group consisting of epoxiconazole and flusilazole.

<u>Formulation/Utility</u>

Mixtures of this invention will generally be used as a formulation or composition comprising at least one carrier selected from agriculturally suitable liquid diluents, solid diluents and surfactants. The formulation or composition ingredients are selected to be consistent with the physical properties of the active ingredient, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. The active ingredients can be (micro)encapsulated and further formed into a suspension or solid formulation; alternatively the entire formulation of active ingredient can be encapsulated (or "overcoated"). Encapsulation can control or delay release of the active ingredient. Sprayable formulations can be extended in suitable media and used at spray volumes from about one to several hundred liters per hectare. High-strength compositions are primarily used as intermediates for further formulation.

The formulations will typically contain effective amounts (e.g., from 0.01-99.99 weight percent) of active ingredients together with diluent and/or surfactant within the following approximate ranges which add up to 100 percent by weight.

| | Weight Percent | | |
|---|---|---|---|
| | Active Ingredients | Diluent | Surfactant |
| Water-Dispersible and Water-soluble Granules, Tablets and Powders. | 5-90 | 0-94 | 1-15 |
| Suspensions, Emulsions, Solutions (including Emulsifiable Concentrates) | 5-50 | 40-95 | 0-25 |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., Handbook of Insecticide Dust Diluents and Carriers, 2nd edition, Dorland Books, Caldwell, New Jersey. Typical liquid diluents are described in Marsden, Solvents Guide, 2nd edition., Interscience, New York, 1950. McCutcheon's Detergents and Emulsifiers Annual, Allured Publ. Corp., Ridgewood, New Jersey, as well as Sisely and Wood, Encyclopedia of Surface Active Agents, Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N*,*N*-dialhyltaurates, lignin sulfonates, naphthalene sulfonate formaldehyde condensates, polycarboxylates, and polyoxyethylene/polyoxypropylene block copolymers. Solid diluents include, for example, clays such as bentonite, montmorillonite, attapulgite and kaolin, starch, sugar, silica, talc, diatomaceous earth, urea, calcium carbonate, sodium carbonate and bicarbonate, and sodium sulfate. Liquid diluents include, for example, water, *N*,*N*-dimethylformamide, dimethyl sulfoxide, *N*-alkylpyrrolidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-mothyl-2-pentanone, and alcohols such as methanol, cyclohexanol, decanol and tetrahydrofurfuryl alcohol.

Solutions, including emulsifiable concentrates, can be prepared by simply mixing the ingredients. Dusts and powders can be prepared by blending and, usually, grinding as in a hammer mill or fluid-energy mill. Suspensions are usually prepared by wet-milling; see, for example, U.S. 3,060,084. Preferred suspension concentrates include those containing, in addition to the active ingredient, from 5 to 20% nonionic surfactant (for example, polyethoxylated fatty alcohols) optionally combined with 50-65% liquid diluents and up to 5% anionic surfactants. Granules and pellets can be prepared by spraying the active material upon preformed granular carriers or by agglomeration techniques. See Browning; "Agglomeration", Chemical Engineering, December 4, 1967, pp 147-48, Perry's Chemical Engineer's Handbook 4th edition, McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding the art of formulation, see U.S. 3,235,361, Col. 6, line 16 through Col. 7, line 19 and Examples 10-41; U.S. 3,309,192, Col. 5, line 43 through. Col. 7, line 62 and Examples 8, 12, 15,39,41; 52, 53, 58; 132, 138-140, 162-164, 166, 167 and 169-182; U.S. 2,891,855, Col. 3, line 66 through Col. 5, line 17 and Examples 1-4; Klingman, Weed Control as a Science, John Wiley and Sons, Inc., New York, 1961, pp 81-96; and Hance et al., Weed Control Handbook, 8th edition., Blackwell Scientific Publications, Oxford, 1989.

In the following Examples, all percentages are by weight and all formulations are prepared in conventional ways. The term "active ingredients" as used in Example A through E refers to the combination of compounds from group (a) and group (b), together with any other active ingredient(s) present (e.g., any compound from group (c)). Without further elaboration, it is believed that one skilled in the art using the preceding description can utilize the present invention to its fullest extent. The following Examples are, therefore, to be construed as merely illustrative, and not limiting of the disclosure in any way whatsoever. Percentages are by weight except where otherwise indicated.

Example A

| Wettable Powder | |
|---|---|
| active ingredients | 65.0% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example B

| Granule | |
|---|---|
| active ingredients | 10.0% |
| attapulgite granules (low volatile matter, 0.71/0.30 mm; U.S.S. No. 25-50 sieves) | 90.0%. |

Example C

| Extruded Pellet | |
|---|---|
| active ingredients | 25.0% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Example D

| Emulsifiable Concentrate | |
|---|---|
| active ingredients | 20.0% |
| blend of oil soluble sulfonates and polyoxyethylene ethers | 10.0% |
| isophorone | 70.0%. |

Example E

| Suspension Concentrate | |
|---|---|
| active ingredients | 20.0% |
| polyethoxylated fatty alcohol | 15.0% |
| ester derivative of montan wax | 3.0% |
| calcium lignosulfonate | 2.0% |
| polyethoxylated/polypropoxylated polyglycol block copolymer | 1.0% |

(continued)

| Suspension Concentrate | |
|---|---|
| propylene glycol | 6.4% |
| poly(dimethylsiloxane) | 0.6% |
| antimicrobial agent | 0.1% |
| water | 51.9%. |

Compositions of this invention can also include one or more other insecticides, fungicides, nematocides, bactericides, acaricides, growth regulators, chemosterilants, semiochemicals, repellents, attractants, pheromones, feeding stimulants or other biologically active compounds to form a multi-component pesticide giving an even broader spectrum of agricultural protection. Examples of such agricultural protectants with which compositions of this invention can be formulated are: insecticides such as abamectin, acephate, azinphos-methyl, bifenthrin, buprofezin, carbofuran, chlorfenapyr, chlorpyrifos, chlorpyrifos-methyl, cyfluthrin, beta-cyfluthrin, cyhalothrin, lambda-cyhalothrin, deltamethrin, diafenthiuron, diazinon, diflubenzuron, dimethoate, esfenvalerate, ethiprole, fenoxycarb, fenpropathrin, fenvalerate, fipronil, flucythrinate, tau-fluvalinate, fonophos, imidacloprid, indoxacarb, isofenphos, malathion, metaldehyde, methamidophos, methidathion, methomyl, methoprene, methoxychlor, monocrotophos, oxamyl, parathion, parathion-methyl, permethrin, phorate, phosalone, phosrnet, phosphamidon, pirimicarb, profenofos, rotenone, sulprofos, tebufenozide, tefluthrin, terbufos, tetrachlorvinphos, thiodicarb, tralomethrin, trichlorfon and triflumuron; fungicides besides those listed for component (b) and component (c), such as acibenzolar-S-methyl, benalaxyl (including benalaxyl-M), benthiavalicarb, benomyl, blasticidin-S, Bordeaux mixture (tribasic copper sulfate), boscalid, buthiobate, carpropamid, captafol, captan, carbendazim, chloroneb, chlorothalonil, copper oxychloride, copper salts, cymoxanil, cyazofamid, cyflufenamid, cyprodinil, diclocymet, diclomezine, dicloran, dimethomorph, dodine, edifenphos, ethaboxam, fenhexamid, fenoxanil, fenpiclonil, fenpropidin, fenpropimorph, fentin acetate, fentin hydroxide, fluazinarn, fludioxonil, flumorph, flutolanil, folpet, fosetyl-aluminum, furalaxyl, furametapyr, guazatine, hymexazol, iminoctadine, iprobenfos, iprodione, iprovalicarb, isoprothiolane, kasugamycin, mancozeb, maneb, mefenoxam, mepanapyrim, mepronil, metalaxyl, metrafenone, neo-asozin (ferric methanearsonate), oxadixyl, pencycuron, picobenzamid, probenazole, propamocarb, proquinazid, pyrimethanil, pyroquilon, quinoxyfen, silthiofam, spiroxamine, sulfur, thiabendazole, thifluzamide, thiophanate-methyl, thiram, tiadinil, tolylfluanid, validamycin, vinclozolin and zoxamide; nematocides such as aldoxycarb and fenamiphos; bactericides such as streptomycin; acaricides such as amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben and tebufenpyrad; and biological agents such as *Bacillus thuringiensis* including ssp. *alzawai* and *kurstaki, Bacillus thuringiensis* delta endotoxin, baculovirus, and entomopathogenic bacteria, virus and fungi. Descriptions of various commercially available compounds listed above may be found in The Pesticide Manual, Twelfth Edition, C.D.S. Tomlin, ed., British Crop Protection Council, 2000. For embodiments where one or more of these various mixing partners are used, the weight ratio of these various mixing partners (in total) to the total amount of component (a) and component (b) is typically between 100:1 and 1:3000. Of note are weight ratios between 30:1 and 1:300 (for example ratios between 1:1 and 1:30). It will be evident that including these additional.components may expand the spectrum of diseases controlled beyond the spectrum controlled by the combination of component (a), component (b), and the optional component (c) alone.

Of particular note are compositions which in addition to component (a), component (b), and the optional component (c), if present, include (d) at least one compound selected from the group consisting of

(d1) alkylenebis(dithiocarbamate) fungicides;
(d2) cymoxanil;
(d3) phenylamide fungicides;
(d4) pyrimidinone fungicides;
(d5) chlorothalonil;
(d6) carboxamides acting at complex II of the fungal mitochondrial respiratory electron transfer site;
(d7) quinoxyfen;
(d8) metrafenone;
(d9) cyflufenamid;
(d10) cyprodinil;
(d11) copper compounds;
(d12) phthalimide fungicides;
(d13) fosetyl-aluminum;
(d14) benzimidazole fungicides;
(d15) cyazofamid;

(d16) fluazinam;
(d17) iprovalicarb;
(d18) propamocarb;
(d19) validomycin;
(d20) dichlorophenyl dicarboximide fungicides;
(d21) zoxamide; and
(d22) dimethomorph;
(d23) non-DMI sterol biosynthesis inhibitors; and

agriculturally suitable salts of compounds of (d1) through (d23).

Pyrimidinone Fungicides (group (d4))

Pyrimidinone fungicides include compounds of Formula II

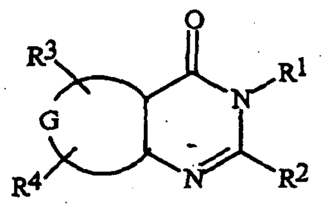

II

wherein

G forms a fused phenyl, thiophene or pyridine ring;
$R^1$ is $C_1$-$C_6$ alkyl;
$R^2$ is $C_1$-$C_6$ alkyl or $C_1$-$C_6$ alkoxy;
$R^3$ is halogen; and
$R^4$ is hydrogen or halogen.

Pyrimidinone fungicides are described in World Patent Application Publication WO94/26722, U.S. Patent No. 6,066;638; U.S. Patent No. 6,245,770, U.S: Patent No. 6,262,058 and U.S. Patent No. 6,277,858.

Of note are pyrimidinone fungicides selected from the group:

6-bromo-3-propyl-2-propyloxy-4-(3*H*)-quinazolinone,
6,8-diiodo-3-propyl-2-propyloxy-4(3*H*)-quinazolinone,
6-iodo-3-propyl-2-propyloxy-4(3*H*)-quinazolinone (proquinazid),
6-chloro-2 propoxy-3-propylthieno[2,3-*d*]pyrimidin-4(3*H*)-one,
6-bromo-2-propoxy-3-propylthieno[2,3-*d*]pyrimidin-4(3*H*)-one,
7-bromo-2-propoxy-3,propylthieno[3,2-*d*]pyrimidin-4-(3*H*)-one,
6-bromo-2-propoxy-3-propylpyrido[2,3-*d*]pyrimidin-4(3*H*)-one,
6,7-dibromo-2-propoxy-3-propylthieno[3,2-*d*]pyrimidin-4(3*H*)-one, and
3-(cyclopropylmethyl)-6-iodo-2-propylthio)pyrido[2,3-*d*]pyrimidin-4(3*H*)-one.

Other Fungicide Groups

Alkylenebis(dithiocarbamate)s (d1) include compounds such as mancozeb, maneb, propineb and zineb.

Phenylamides (d3) include compounds such as metalaxyl, benalaxyl, furalaxyl and oxadixyl.

Carboxamides (d6) include compounds such as boscalid, carboxin, fenfuram, flutolanil, furametpyr, mepronil, oxycarboxin and thifluzamide are known to inhibit mitochondrial function by disrupting complex II (succinate dehydrogenase) in the respiratory electron transport chain.

Copper compounds (d11) include compounds such as copper oxychloride, copper sulfate and copper hydroxide, including compositions such as Bordeaux mixture (tribasic copper sulfate).

Phthalimides (d12) include compounds such as folpet and captan.

Benzimidazole fungicides (d14) include benomyl and carbendazim.

Dichlorophenyl dicarboximide fungicides (d20) include chlozolinate, dichlozoline, iprodione, isovaledione, myclozolin, procymidone and vinclozolin.

Non-DMI sterol biosynthesis inhibitors (d23) include morpholine and piperidine fungicides. The morpholines and piperidines are sterol biosynthesis inhibitors that have been shown to inhibit steps in the sterol biosynthesis pathway at a point later than the inhibitions achieved by the DMI sterol biosynthesis (i.e., component (c)). The morpholines include aldimorph, dodemorph, fenpropimorph, tridemorph and trimorphamide. The piperidines include fenpropidin.

Of note are such compositions wherein the overall weight ratio of components (b), (d) and, if present, (c) to component (a) is from 100:1 to 1:100 and the weight ratio of component (b) to component (a) is from 25:1 to 1:25. Included are compositions wherein the weight-ratio of component (b) to-component (a) is from 5:1 to 1:1:

The mixtures and compositions of this invention are useful as plant disease control agents. The present invention therefore further comprises a method for controlling plant diseases caused by fungal plant pathogens comprising applying to the plant or portion thereof to be protected, or to the plant seed or seedling to be protected, an effective amount of a mixtures of the invention or a fungicidal composition containing said mixture.

The mixtures and compositions of this invention provide control of diseases caused by a broad spectrum of fungal plant pathogens in the Basidiomycete, Ascomycete, Oomycete and Deuteromycete classes. They are effective in controlling a broad spectrum of plant diseases, particularly foliar pathogens of ornamental, vegetable, field, cereal, and fruit crops. These pathogens include:

> Oomycetes, including *Phytophthora* diseases such as *Phytophthora infestans, Phytophthora megasperma, Phytophthora parasitica, Phytophthora cinnamoni* and *Phytophthora capsici*; *Pythium* diseases such as *Pythium aphanidermatum;* and diseases in the Peronosporaceae family, such as *Plasmopara viticola, Peronospora* spp. *(including Peronospora tabacina* and *Peronospora parasitica), Pseudoperonospora* spp. (including *Pseudoperonospora cubensis),* and *Bremia lactucae;*
>
> Ascomycetes, including *Alternaria* diseases such as *Alternaria solani* and *Alternaria brassicae; Guignardia* diseases such as *Guignardia bidwell; Venturia* diseases such as *Venturia inaequalis; Septoria* diseases such as *Septoria nodorum* and *Septoria tritici;* powdery mildew diseases such as *Erysiphe* spp. (including *Erysiphe graminis* and *Erysiphe polygoni*), *Uncinula necatur, Sphaerotheca fuligena,* and *Podosphaera leucotricha; Pseudocercosporella herpotrichoides; Botrytis* diseases such as *Botytis cinerea; Monilinia fructicola; Sclerotinia* diseases such as *Sclerotinia sclerotiorum; Magnaporthe grisea; Phomopsis viticola; Helminthosporium* diseases such as *Helminthosporium tritici repentis; Pyrenophora teres*; anthracnose diseases such as *Glomerella* or *Colletotrichum* spp. (such as *Colletotrichum graminicola*)*;* and *Gaeumannomyces graminis;*
>
> Basidiomycetes, including rust diseases caused by *Puccinia* spp. (such as *Puccinia recondita, Puccinia striiformis, Puccinia hordei, Puccinia graminis, and Puccinia arachidis*); *Hemileia vastatrix;* and *Phakopsora pachyrhizi;*
>
> other pathogens including *Rhizoctonia* spp (such as *Rhizoctonia solani*); *Fusarium* diseases such as *Fusarium roseum, Fusarium graminearum* and *Fusarium oxysporum*; *Verticillium dahliae; Sclerotium rolfsii; Rynchosporium secalis*; *Cercosporidium personatum, Cercospora arachidicola* and *Cercospora beticola;*

and other genera and species closely related to these pathogens.

In addition to their fungicidal activity, the mixtures and compositions can also have activity against bacteria such as *Erwinia amylovora, Xanthomonas campestris, Pseudomonas syringae*, and other related species.

Of note is use of a mixture of this invention for controlling *Erysiphe graminis* (wheat powdery mildew), especially using a mixture wherein component (b) is trifloxystrobin.

Of note is use of a mixture of this invention for controlling *Septoria nodorum* (Septoria-glume blotch), especially using a mixture wherein component (b) is trifloxystrobin.

Of note is use of a mixture of this invention for controlling *Pyrenophora teres* (barley net blotch), especially using a mixture wherein component (b) is trifloxystrobin.

Of note is use of a mixture of this invention for controlling *Puccinia recondita* (wheat leaf rust), especially using a mixture wherein component (b) is trifloxystrobin.

Also noteworthy is the use of a mixtures or composition of this invention to provide control of diseases caused by a broad spectrum of fungal plant pathogens preventatively or curatively by applying an effective amount of the mixture or composition either pre- or post-infection.

Plant disease control is ordinarily accomplished by applying an effective amount of a mixture of this invention either pre- or post-infection, to the portion of the plant to be protected such as the roots, stems, foliage, fruit, seeds, tubers or bulbs, or to the media (soil or sand) in which the plants to be protected are growing. Application of the mixture to a seed can protect both the seed and the seedling grown from the seed. Typically the mixture is applied in the form of a composition comprising at least one additional component selected from the group consisting of surfactants, solid diluents and liquid diluents.

Rates of application for these compounds can be influenced by many factors of the environment and should

be determined under actual use conditions. Foliage can normally be protected when treated at a rate of from less than 1 g/ha to 5,000 g/ha total of active ingredients of components (a) and (b) in the mixtures and compositions of the present invention. Seed and seedlings can normally be protected when seed is treated at a rate of from 0.1 to 10 g total of active ingredients of components (a) and (b) per kilogram of seed.

The mixture of this invention provides advantageous control of fungal plant diseases when compared to the control achieved by each of the component alone. Mixtures of this invention have been found to exhibit synergy, particularly in connection with controlling certain diseases such as barley net blotch caused by *Pyrenophora teres.*

The following Tests can be used to demonstrate the control efficacy of compositions of this invention on specific pathogens. The pathogen control protection afforded by the compounds is not limited, however, to these species.

BIOLOGICAL EXAMPLES OF THE INVENTION

Test suspensions comprising a single formulated active ingredient are sprayed to demonstrate the control efficacy of the active ingredient individually. To demonstrate the control efficacy of a combination, (a) the active ingredients can be combined in the appropriate amounts in a single test suspension, (b).stock solutions of individual active ingredients can be prepared and then combined in the appropriate ratio, and diluted to the final desired concentration to form a test suspension or (c) test suspensions comprising single active ingredients can be sprayed sequentially in the desired ratio.

Composition 1

| Ingredients | Wt. % |
|---|---|
| Compound of Formula I, prepared as a 20 % suspension concentrate | 200 grams active /liter |

Composition 2

| Ingredients | Wt % |
|---|---|
| trifloxystrobin (TWIST Fungicide), formulated as a suspension concentrate | 125 grams active /liter |

Composition 3

| Ingredients | Wt. % |
|---|---|
| epoxiconazole (OPUS Fungicide), formulated as a emulsifiable concentrate | 125 grams active /liter |

Test compositions are first mixed with water. The resulting test suspensions are then used in the following field tests. Test suspensions are sprayed at a volume of 200 liters per hectare. Application rates are 50, 100, and 200 grams per hectare.

TEST A

Established field plots of winter wheat (cv. ’Onvanlis’) are sprayed when node 4 is at least 2 cm above node 3 in the wheat plants and again when the flag leaf is fully emerged. Four replications are used. Plots are evaluated visually for control of symptoms of wheat leaf blotch caused by *Septoria tritici.* The results are reported as the mean average of the four replications.

TEST B

Established field plots of winter barley (cv. ’Esterel’) are sprayed when the flag leaf of the barley plant is fully emerged. Three replications are used. Plots are evaluated visually for control of symptoms of barley net blotch caused by *Pyrenophora teres.* The results are reported as the average mean percent disease control of the three replications.

Table A lists results for Tests A and B. In Table A, a rating of 100 indicates 100% disease control and a rating of 0 indicates no disease control (relative to the controls). Columns labeled "Avg" indicates the average of the three or four replications.

Table A

| Test Results | | | | | |
|---|---|---|---|---|---|
| Composition | Application Rate (g/ha) | Test A | | Test B | |
| | | Avg | Exp | Avg | Exp |
| 1 | 50 | 31 | - | 12 | - |
| 1 | 100 | 48 | - | 28 | - |
| 1 | 200 | 56 | - | 31 | - |
| 2 | 100 | 53 | - | 66 | - |
| 3 | 100 | 63 | - | 31 | - |
| 1 + 2 | 100 + 200 | 73 | 76 | 86 | 75 |
| 1 + 3 | 100 + 100 | 86 | 80 | 66 | 50 |
| 2 + 3 | 200+ 100 | 80 | 83 | 67 | 76 |

Table A shows mixtures and compositions of the present invention demonstrating advantageous control.

The presence of a synergistic effect between two active ingredients is established with the aid of the Colby equation (see S. R. Colby, "Calculating Synergistic and Antagonistic Responses of Herbicide Combinations", *Weeds,* **1967**,15, 20-22):

$$p = A + B - \left[ \frac{A \times B}{100} \right]$$

Using the method of Colby, the presence of a synergistic interaction between two active ingredients is established by first calculating the predicted activity, p, of the mixture based on activities of the two components applied alone. If p is lower than the experimentally observed effect, synergism has occurred. In the equation above, A is the fungicidal activity in percentage control of one component applied alone at rate x. The B term is the fungicidal activity in percentage control of the second component applied at rate y. The equation estimates p, the fungicidal activity of the mixture of A at rate x with B at rate y if their effects are strictly additive and no interaction has occurred.

Columns labeled "Exp" in Table A indicate the expected value for each treatment mixture using the Golby equation. As is shown in Table A, application of the Colby equation reveals that the observed control is higher than expected for the mixture of Composition 1 with Composition 2 (100 g/ha + 200 g/ha) for Test B and for the mixture of Composition 1 with Composition 3 (100 g/ha + 100 g/ha) for both Test A and Test B.

## Claims

**1.** A fungicidal mixture comprising:

(a) the thiophene derivative of Formula I or an agriculturally suitable salt thereof

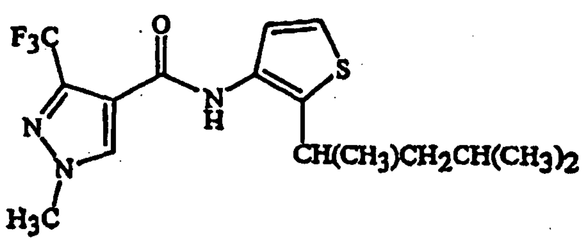
;

I

and

(b) at least one compound selected from the group consisting of famoxadone, fenamidone, and compounds of Formula III which act at the $bc_1$ complex of the fungal mitochondrial respiratory electron transfer site;

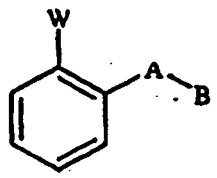

III

wherein

W is one of the following group

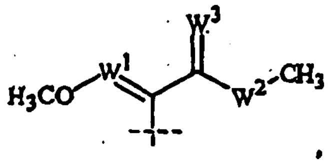 , 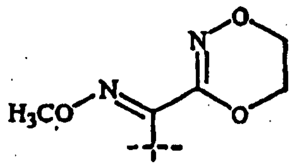 or 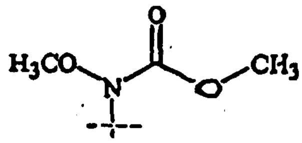 ;

$W^1$ is N or CH;
$W^3$ is O or $CH_2$;
A is one of the following groups (wherein asterisk (*) is attached to the phenyl ring of the Formula III),

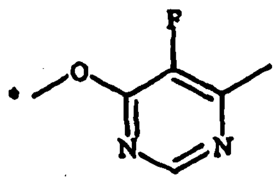 , 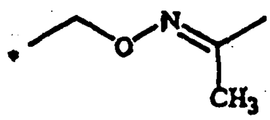 or 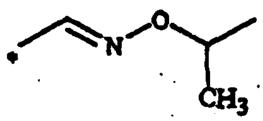 ;

B is 1,2-propandion-bis(*O*-methyloxim)-1-yl; or phenyl, phenoxy or pyridinyl, each optionally substituted with 1 or 2 substituents selected from Cl, CN, methyl or trifluoromethyl; or
A and B together are $-CH_2O$(1-[4-chlorophenyl]-pyrazol-3-yl) or $-CH_2O$(6-trifluoromethyl-2-pyridinyl).

and agriculturally suitable salts thereof; and optionally
(c) at least one compound selected from the group consisting of compounds acting at the demethylase enzyme of the sterol biosynthesis pathway and agriculturally suitable salts thereof,

2. A mixture of Claim 1 wherein component (b) is trifloxystrobin.

3. A mixture of Claim 2 wherein component (c) is present and is epoxiconazole.

4. A fungicidal composition comprising a fungicidally effective amount of the mixture of any one of Claims 1 to 3 and at least one additional components selected from the group consisting of surfactants, solid diluents and liquid diluents.

5. A composition of Claim 4 wherein the weight ratio of component (b) to component (a) is from 100:1 to 1:100.

6. A composition of Claim 5 wherein the weight ratio of component (b) to component (a) is from 10:1 to 1:10.

7. A composition of Claim 6 wherein the weight ratio of component (b) to component (a) is from 5:1 to 1:1.

8. A method for controlling a plant disease caused by a fungal plant pathogen comprising applying to the plant or portion thereof a fungicidally effective amount of the mixture of any one of Claims 1 to 3.

**9.** A method of Claim 8 wherein the fungal plant pathogen is *Pyrenophora teres.*

**10.** A method of Claim 8 wherein the fungal plant pathogen is *Septoria tritici.*

## Patentansprüche

**1.** Fungizides Gemisch, umfassend:

(a) das Thiophenderivat der Formel I oder ein landwirtschaftlich geeignetes Salz davon

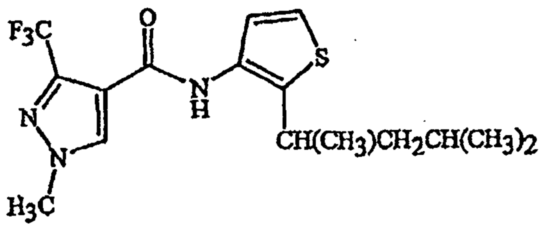

I;

und

(b) mindestens eine Verbindung, ausgewählt aus der Gruppe, bestehend aus famoxadone, fenamidone, und Verbindungen der Formel III, welche an dem $bc_1$-Komplex der Elektronenübertragungstelle der pilzlichen mitochondrialen Atmung wirken;

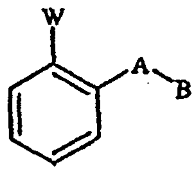

III

wobei

W eine von den folgenden Gruppen ist

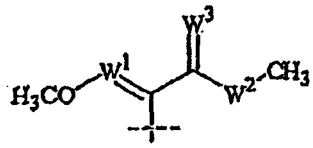

,

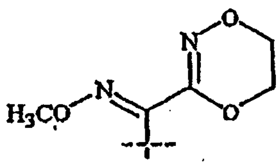

oder

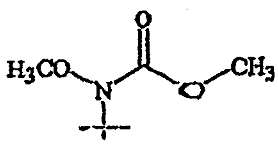

;

$W^1$ N oder CH ist;
$W^2$ NH, O oder $CH_2$ ist;
$W^3$ O oder $CH_2$ ist;
A eine von den folgenden Gruppen ist (wobei das Sternchen (*) mit dem Phenylring der Formel III verbunden ist),

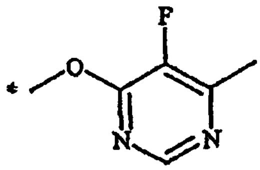, 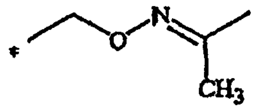 ou 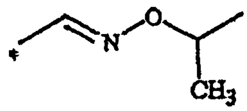 ;

B 1,2-Propandion-bis(*O*-methyloxim)-1-yl; oder Phenyl, Phenoxy oder Pyridinyl, jedes gegebenenfalls substituiert mit 1 oder 2 Substituenten, ausgewählt aus Cl, CN, Methyl oder Trifluormethyl, ist; oder
A und B zusammen $-CH_2O$(1-[4-Chlorphenyl]-pyrazol-3-yl) oder $-CH_2O$(6-Trifluormethyl-2-pyridinyl) sind,

und landwirtschaftlich geeignete Salze davon; und wahlweise
(c) mindestens eine Verbindung, ausgewählt aus der Gruppe, bestehend aus Verbindungen, die auf das Demethylase-Enzym des Sterol-Biosyntheseweges einwirken, und landwirtschaftlich geeignete Salze davon.

**2.** Gemisch nach Anspruch 1, wobei Komponente (b) Trifloxystrobin ist.

**3.** Gemisch nach Anspruch 2, wobei Komponente (c) vorhanden ist und Epoxiconazol ist.

**4.** Fungizide Zusammensetzung, umfassend eine fungizid wirksame Menge des Gemisches nach einem der Ansprüche 1 bis 3 und mindestens eine zusätzliche Komponente, ausgewählt aus der Gruppe, bestehend aus Tensiden, festen Verdünnungsmitteln und flüssigen Verdünnungsmitteln.

**5.** Zusammensetzung nach Anspruch 4, wobei das Gewichtsverhältnis von Komponente (b) zu Komponente (a) von 100:1 bis 1:100 beträgt.

**6.** Zusammensetzung nach Anspruch 5, wobei das Gewichtsverhältnis von Komponente (b) zu Komponente (a) von 10:1 bis 1:10 beträgt.

**7.** Zusammensetzung nach Anspruch 6, wobei das Gewichtsverhältnis von Komponente (b) zu Komponente (a) von 5:1 bis 1:1 beträgt.

**8.** Verfahren zum Kontrollieren einer Pflanzenkrankheit, verursacht durch ein pilzartiges Pflanzenpathogen, umfassend Aufbringen einer fungizid wirksamen Menge des Gemisches nach einem der Ansprüche 1 bis 3 auf die Pflanze oder einen Teil davon.

**9.** Verfahren nach Anspruch 8, wobei das pilzartige Pflanzenpathogen *Pyrenophora teres* ist.

**10.** Verfahren nach Anspruch 8, wobei das pilzartige Pflanzenpathogen *Septoria tritici* ist.

## Revendications

**1.** Mélange fongicide qui comprend:

(a) le dérivé du thiopène de Formule I ou un sel approprié sur le plan agricole de celui-ci

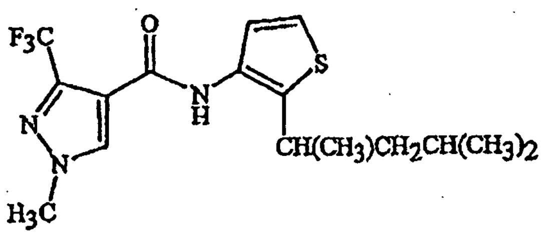

I;

et

(b) au moins un composé sélectionné dans le groupe consistant en famoxadone, fenamidone, et des composés de formule III qui agissent sur le complexe $bc_1$ du site de transfert d'électrons de la chaîne respiratoire mitochondriale fongique;

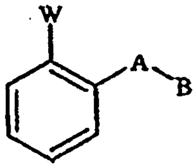

III

où

W est l'un des groupements suivants

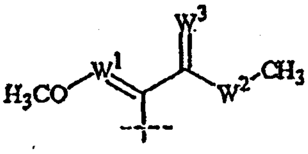

,

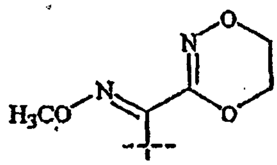

ou

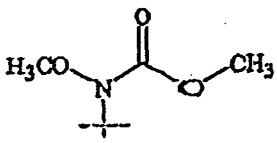

;

$W^1$ est N ou CH;
$W^2$ est NH, O ou $CH_2$;
$W^3$ est O ou $CH_2$;
A est l'un des groupements suivants [où l'astérisque (*) indique le point d'attache au cycle phényle de Formule III],

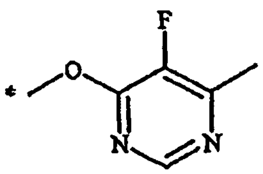

,

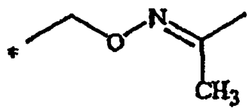

ou

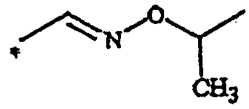

;

B est un groupement 1,2-propandion-bis(O-méthyloxim)-1-yle; ou un groupement phényle, phénoxy ou pyridinyle chacun éventuellement substitué par 1 ou 2 substituants sélectionnés parmi Cl ou un groupement CH, méthyle ou trifluorométhyle; ou
A et B sont ensemble un groupement $-CH_2O$(1-[4-(chlorophényl]-pyrazol-3-yle) ou $-CH_2O$(6-trifluorométhyl-2-pyridinyle).

et des sels appropriés sur le plan agricole de ceux-ci; et, en option
(c) au moins un composé sélectionné dans le groupe consistant en des composés qui agissent sur l'enzyme déméthylase de la voie de biosynthèse des stérols, ou des sels appropriés sur le plan agricole de celui-ci.

**2.** Mélange de la revendication 1, où le composant (b) est la trifloxystrobine.

**3.** Mélange de la revendication 2, où le composant (c) est présent et est de l'époxiconazole.

**4.** Composition fongicide comprenant une quantité fongicide efficace du mélange de l'une quelconque des revendications 1 à 3 et au moins un composant additionnel sélectionné dans le groupe consistant en des surfactants, des diluants solides et des diluants liquides.

**5.** Composition de la revendication 4, où le rapport en poids entre le composant (b) et le composant (a) est compris

entre 100:1 et 1:100.

**6.** Composition de la revendication 5, où le rapport en poids entre le composant (b) et le composant (a) est compris entre 10:1 et 1:10.

**7.** Composition de la revendication 6, où le rapport en poids entre le composant (b) et le composant (a) est compris entre 5:1 1 et 1:1.

**8.** Méthode de contrôle d'une maladie végétale causée par un pathogène végétal fongique, qui comprend l'application sur la plante ou sur une portion de celle-ci d'une quantité fongicide efficace du mélange selon l'une quelconque des revendications 1 à 3.

**9.** Méthode de la revendication 8, où le pathogène végétal fongique est *Pyrenophora teres.*

**10.** Méthode de la revendication 8, où le pathogène végétal fongique est *Septoria tritici.*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5747518 A
- US 3060084 A
- WO 9113546 A
- US 4172714 A
- US 4144050 A
- US 3920442 A
- DE 3246493
- US 5180587 A
- US 5232701 A
- US 5208030 A
- GB 2095558 A
- US 3299566 A
- US 3235361 A
- US 3309192 A
- US 2891855 A
- WO 9426722 A
- US 6066638 A
- US 6245770 B
- US 6262058 B
- US 6277858 B


### Non-patent literature cited in the description


- **P. M. L. TAMES.** *Neth. J. Plant Pathology,* 1964, vol. 70, 73-80
- The Pesticide Manual. British Crop Protection Council, 2003
- *Angew. Chem. Int. Ed,* 1999, vol. 38, 1328-1349
- *J. Biol. Chem.,* 1989, vol. 264, 14543-48
- *Methods Enzymol.,* 1986, vol. 126, 253-71
- *J. Biol. Chem.,* 1992, vol. 267, 13175-79
- **K. H. KUCK et al.** Modern Selective Fungicides - Properties, Applications and Mechanisms of Action. Gustav Fischer Verlag, 1995, 205-258
- **WATKINS et al.** Handbook of Insecticide Dust Diluents and Carriers. Dorland Books
- **MARSDEN.** Solvents Guide. Interscience, 1950
- McCutcheon's Detergents and Emulsifiers Annual. Allured Publ. Corp,
- **SISELY ; WOOD.** Encyclopedia of Surface Active Agents. Chemical Publ. Co., Inc, 1964
- **BROWNING.** Agglomeration. *Chemical Engineering,* 04 December 1967, 147-48
- Perry's Chemical Engineer's Handbook. McGraw-Hill, 1963, 8-57
- **KLINGMAN.** Weed Control as a Science. John Wiley and Sons, Inc, 1961, 81-96
- **HANCE et al.** Weed Control Handbook. Blackwell Scientific Publications, 1989
- The Pesticide Manual. British Crop Protection Council, 2000